# EUROPEAN PATENT APPLICATION

(11) **EP 2 083 174 A1**
(43) Date of publication of application: **29.07.2009**
(21) Application number: 08001433.5
(22) Date of filing: 25.01.2008
(51) Int. Cl.: F04D 27/02, F04D 29/46, F04D 29/66

(54) **Inlet guide vane for a gas compressor**

(71) Applicant: SIEMENS AKTIENGESELLSCHAFT, 80333 München (DE)
(72) Inventor: Nilsson, Ulf, Whetstone LE8 6HN Leicester (GB)

(57) **Abstract**

Inlet guide vane (1) for a compressor, the vane being adjustable to modify gas flow properties in the compressor, wherein the guide vane comprises electroactive polymers (12) arranged such that the shape of the vane is adjusted in a specified manner upon applying a voltage to the guide vane.

## Description

The invention relates to an inlet guide vane for a gas compressor, the vane being adjustable to modify gas flow properties in the compressor, as well as a compressor, turbocharger, and gas turbine therefor.

In order to dynamically change the gas flow properties of the gas inlet of a compressor, it is known to use inlet guide vanes that can be turned so that the vanes are provided with a variable stagger or camber. US Patent 3,442,493 and US Patent 5,520,511 show vanes consisiting of two movable parts of fixed form.

In such implementations, the vanes are being manipulated, e.g., with the help of an annular ring to which each vane is coupled. The ring is acted upon by a lever or arm connected to an electric motor, or a hydraulic or pneumatic piston.

However, such arrangements require a number of moving parts, such as the actuators, rings, and linkage, which are subject to mechanical stress, wear, and environmental interferences, thus making such systems particularly vulnerable to mechanical failure.

EP 274293 A1 shows a turbocharger inlet vane comprising of two stable parts of which one is movably connected to the other. This solution generally shares the properties discussed before regarding its movable mechanical components.

US Patent 3,042,371 shows a turbocharger inlet vane which comprises a hollow body, the walls of which are of bimetal. Upon increase of temperature, the bimetallic walls change their shape so that the camber of the vane is varied. The temperature increase can be induced by an electric heating element embedded in the bimetallic wall. The heating elements may be operated by electrically.

US Patent 4,619,580 discloses a variable camber vane which is built up from a laminate which allows for a temperature- responsive deflection of the vane.

PCT patent application publication WO 2006/128827 A1 shows an air intake for a turbocharger for an internal combustion engine with inlet guide vanes made of sound absorbent materials to achieve a substantial reduction of noise.

While this solution reduces the amount of mechanical moving parts, the acting elements are still exposed to wear by environmental stress, and the embedded heating elements provide for an additional source of error.

It is therefore an object of the present invention to provide an adjustable inlet guide vane that provides for improved reliability and reduced mechanical wear, as well as a compressor, turbocharger, and gas turbine therefor.

This object is achieved by the subject of claims 1, 11, 13, and 14.

The invention according to claim 1 proposes an inlet guide vane for a compressor, the vane being adjustable to modify gas flow properties in the compressor, characterized in that the guide vane comprises electroactive polymers (EAPs) arranged such that the shape of the vane is adjusted in a specified manner upon applying a voltage to the guide vane. Suitable electroactive polymers are for example, disclosed in WO 2005/086249, US 6,543,110, WO 2001/031715, and DE 10 2004 043 403. Regarding EAP materials which can be used in the inventive guide vane it is therefore referred to these documents.

When voltage is applied to the EAPs in the vane, the EAPs change their shape such that the vane bends and, consequently, changes its stagger and/or camber. EAPs can be activated directly by applying the respective level of voltage, and thus avoids the use of heating elements, further simplifying electronic control of the vane properties.

The use of EAPs allows for a great variety of configurations in which the shaping element or elements is included in the vane. EAPs can be laminated to a vane substrate, or can be finely distributed in a vane material. EAPs can further be included as capsular elements, laid or knitted fibres. Voltage can be supplied to the EAPs by electric leads, or by using electrically conductive vane materials.

There are, in general, two groups of EAPs which can be used in the inventive guide vane, namely ionic EAPs in which the acuation is caused by a displacement of ions inside the polymer, and dielectric EAP in which actuation is caused by electrostatic forces between two electrodes which squeeze the polymer. If ionic EAPs are used for the vane, the present invention can profit from the low voltage levels required for proper operation while achieving large bending displacements. However, the use of dielectric EPAs is also possible.

Consequently, the present invention allows to reduce the amount of mechanical parts needed for vane shape variation to a minimum, while providing for immediate electronic controllability, and thus significantly enhances the reliability of operation and simplifies its practical application in compressors.

The invention can be further embodied according to the features provided in the dependent claims.

In an embodiment, the inlet guide vane comprises a fixed portion which maintains its shape upon applying the voltage to the guide vane. Such a fixed portion may be implemented by isolating said portion of the vane from the voltage applied, so that no shaping is effected therein, or a different, dimensionally stable material may be used in the fixed portion.

In such embodiments, the fixed portion can be located at a fore side (leading edge, upstream edge), or can be located between a first portion at a fore side and a second portion at an aft side (trailing edge, downstream edge). Said first and second portions may be portions comprising electroactive polymer materials.

In embodiments of the invention, at least a part of the electroactive polymers can be located in a layer extending in longitudinal direction of the vane. Thus, a large portion of the vane area can be influenced by shape control.

This also allows to cover the layer with a flexible coating layer at at least one longitudinal side of the vane. By doing so, the shape-setting element is protected against external influence and mechanical wear. Further, the surface properties can be optimized for the application in the vane, for instance in turbochargers. Flexible coating layers may thus comprise a flexible metal layer and/or a flexible polymer layer. In embodiments where the flexible coating layer comprises a layer of sound absorbent material, the vane may unite shape flexibility with noise reduction.

In practical embodiments, the layer can be laminated to the flexible coating layer.

The inlet guide vane can be built such that its surface facing the wall of the compressor channel is of a generally spherical shape.

The invention according to claim 11 provides a compressor comprising an inlet guide vane according to the present invention. The invention according to claim 13 provides a turbocharger comprising a compressor according to the present invention and its embodiments. The invention according to claim 14 provides a gas turbine with a compressor according to the present invention.

The invention and its embodiments are explained in more detail below, using the following figures:
Fig. 1 shows a schematic longitudinal section of a first embodiment of the invention;
Fig. 2 shows a schematic longitudinal section of a second embodiment of the invention;
Fig. 3 shows a side view of the second embodiment, detailing the surface shaping of the vanes, and
Fig. 4 shows a schematic longitudinal section of a third embodiment of the invention;
Fig. 5 shows a schematic longitudinal section of a fourth embodiment of the invention:

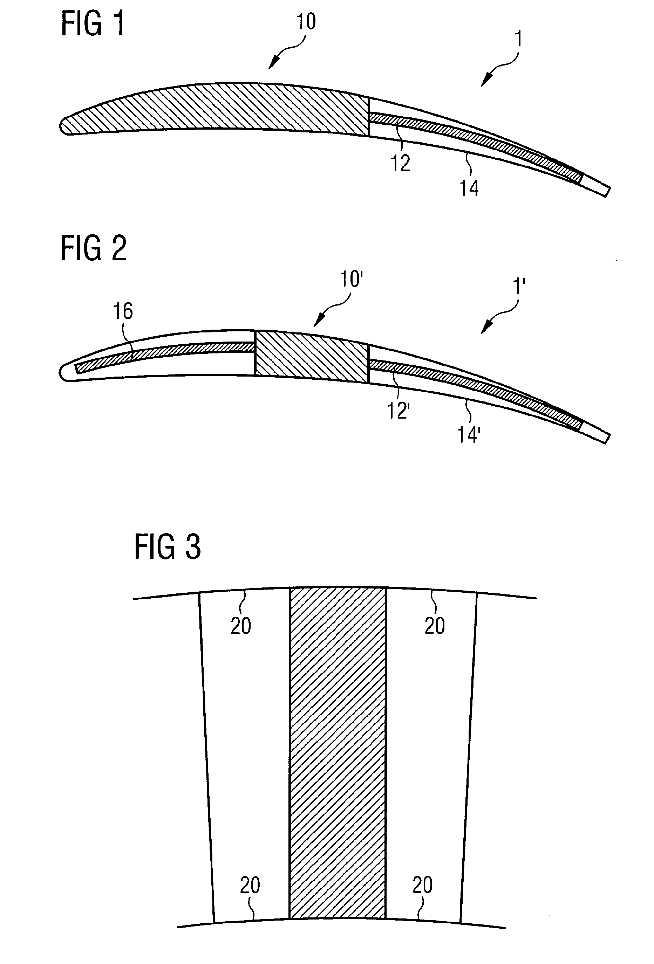

Figures 1 and 2 show a schematic longitudinal section of a first and a second embodiment of the invention, which may be used in a compressor, for instance in the compressor of a turbocharger.

Inlet vane 1 comprises a rigid, structurally fixed portion 10 which is coupled to an aft portion that comprises an electroactive polymer (EAP) member 12 and a flexible skin 14 of metal or polymer materials. In the present embodiment, EAP member 12 is laminated to skin 14, and is supplied with voltage using electrical leads (not shown). The electrical leads can be led through the structural fixed portion 10. Alternatively, the structural fixed portion 10 itself can be electrically conductive so as to replace one or more of the leads. If it replaces more than one lead it would comprise a respective number of conductive portions which are electrically isolated against each other.

As the person skilled in the art will acknowledge, in the entire description and claims, fore and aft relate to the upstream edge and downstream edge, or leading edge and trailing edge, respectively, the streaming direction being from left to right in the drawings, fore being displayed as left, aft being displayed as right.

Likewise, inlet vane 1` of the second embodiment, which is shown in Figure 2, comprises a rigid, structurally fixed portion 10` which is coupled to an aft portion that comprises an EAP member 12` and a flexible skin 14` of metal or polymer materials. Also in this embodiment, EAP member 12` is laminated to skin 14`, and is supplied with voltage using electrical leads. Like in the first embodiment, the leads can be led through the structural fixed portion, or the structural fixed portion can replace one or more leads.

However, in vane 1', a further, fore, portion is coupled to the structurally fixed portion 10'. In this portion, an EAP member 16 is laminated to a flexible skin as well. This EAP member 16 is also supplied with voltage by leads and /or the structural fixed member 10'

EAP layers 12, 12`, and 16 comprise, or consist of, EAP materials and are designed such that a specified shape is taken at specific voltages that can be applied to the EAP layer. In the present case, particular degrees of deflection are associated to input voltage. Flexible skins 14 and 14' surround the EAP member to protect it against external influence and mechanical wear.

In embodiments, the skin 14, 14' does not have to be in direct contact with EAP member 12, 12' (EAP member 16 likewise) along the entire member length. If EAP member and skin are in direct contact only in defined portions, the relative displacement due to the curvatures and varying thickness of the vane when changing shape (i.e., bending) is being allowed for. Further, by having such a contact in defined portions of the EAP member, the force that the EAP member must provide in order to effect the bending of the vane is reduced. If, instead of one monolithic EAP member, a number of stripes, for instance up to 12 stripes, is mechanically coupled, such that they can slide relative to each other, the force or power required for a specified bending of the vane is further reduced.

Figure 3 shows a side view of the plane of the vane according to the second embodiment. As can be seen, the edges of the vane are of spherical shape, so that leakage between a vane and the wall of a spherical compressor channel is minimized. Where indicated by 20, the shape-adapting portions of the vane are configured such that the spherical shape is kept while increasing vane stagger/camber.

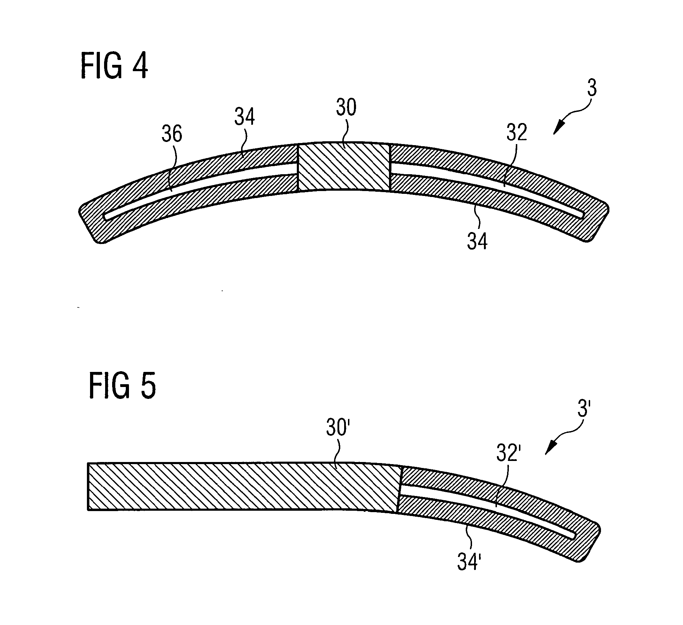

Figures 4 and 5 shows a schematic longitudinal section of a third and a fourth embodiment of the invention, respectively, which may be used in a silencer of a turbocharger.

The configuration of these embodiments generally corresponds to the configuration of the embodiments described with respect to figures 1 and 2. In particular, what has been said about supplying the EAPs with voltage with respect to the first and second embodiment is also true for the third and fourth embodiment.

In the silencer vane 3 shown in Figure 4, a rigid portion 30 is located between and coupled to a fore portion that comprises an EAP layer 36 laminated to covering layer 34, and an aft portion, also comprising an EAP layer 32 laminated to covering layer 34.

Regarding the contact area between the EAP layers and covering layers of the third and fourth embodiment, the details given with regard to the first and second embodiment of the invention apply respectively.

In the silencer vane 3` shown in Figure 5, the rigid portion 30' forms a voltage-invariant fore portion of the vane, and is coupled to an aft portion that is equivalent to the aft portion of vane 3.

In the vanes 3 and 3` of the third and fourth embodiments the materials of covering layers 34 and 34` are selected to both provide sound absorbing properties to the vane and to be flexible, so that, while the noise level is being reduced, the EAP member, upon changing its own shape, can influence the overall shape of the vane. Further, the structurally fixed parts 30 and 30` can be provided with sound-absorbing qualities by proper material selection.

Thus, the system presently shown provides an effective and reliable way of varying the vane shape in an electronic manner, and thus significantly enhances the reliability of operation and simplifies its practical application in turbochargers.

As the person skilled in the art will acknowledge, the inlet guide vane of the present invention and its embodiments is not limited to turbochargers. It may be applied in a profitable manner in various types of centrifugal compressors for compression of different gases, such as natural gas, oxygen, nitrogen, and the like. Further, it can be applied to axial compressors, in which case the first rows of variable guide vanes can be equipped with the technology of present invention, where the compressor operating temperature is within the range of the operating temperature of the EAP material.

## Claims

1. Inlet guide vane (1, 1', 3, 3') for a compressor, the vane being adjustable to modify gas flow properties in the compressor,
**characterized in that**
the guide vane comprises electroactive polymers (12, 12', 16, 32, 32', 36) arranged such that the shape of the vane is adjusted in a specified manner upon applying a voltage to the guide vane.

2. Inlet guide vane according to claim 1, **characterized in that** it comprises a fixed portion (10, 10', 30, 30') which maintains its shape upon applying the voltage to the guide vane.

3. Inlet guide vane according to claim 2, **characterized in that** the fixed portion (10, 30') is located at a fore side.

4. Inlet guide vane according to claims 2 or 3, **characterized in that** the fixed portion is located between a first portion (16, 36) at a fore side and a second portion (12, 12', 32, 32') at an aft side.

5. Inlet guide vane according to any one of claims 1 to 4, **characterized in that** at least a part of the electroactive polymers is located in a layer (12, 12', 16, 32, 32', 36') extending in longitudinal direction of the vane.

6. Inlet guide vane according to claim 5, **characterized in that** the layer is covered with a flexible coating layer (14, 14', 34, 34') at at least one longitudinal side of the vane.

7. Inlet guide vane according to claim 6, **characterized in that** the flexible coating layer comprises a flexible metal layer and/or a flexible polymer layer (14, 14').

8. Inlet guide vane according to claim 6 or 7, **characterized in that** the flexible coating layer comprises a layer of sound absorbent material (34, 34').

9. Inlet guide vane according to any one of claims 5 to 8, **characterized in that** the layer is laminated to the flexible coating layer.

10. Inlet guide vane according to any one of claims 1 to 9, **characterized in that** its surface facing a wall of a channel of the compressor is of a generally spherical shape.

11. Compressor comprising an inlet guide vane according to any one of claims 1 to 10.

12. Compressor according to claim 11, **characterized in that** it is configured as a centrifugal compressor.

13. Turbocharger with a compressor according to claim 11 or 12.

14. Gas turbine with a compressor according to claim 11 or 12.
